# EUROPEAN PATENT SPECIFICATION

(11) **EP 3 776 105 B1**
(45) Date of publication and mention of the grant of the patent: **04.05.2022**
(21) Application number: 18715629.4
(22) Date of filing: 29.03.2018
(51) Int. Cl.: G05B 17/02, G05B 23/02

(54) **EMISSION CONTROL OF AN ASPHALT MIXING PLANT**
EMISSIONSSTEUERUNG EINER ASPHALTMISCHANLAGE
LUTTE CONTRE LES ÉMISSIONS D'UNE INSTALLATION DE MÉLANGE D'ASPHALTE

(43) Date of publication of application: 17.02.2021
(73) Proprietor: Ammann Schweiz AG, 4900 Langenthal (CH)
(72) Inventor: BOESIGER, Lukas, 4900 Langenthal (CH); KLARER, Michael, 4900 Langenthal (CH); FIERZ, Roger, 4802 Strengelbach (CH)
(74) Representative: Meyer, Michael Josef
(86) International application number: PCT/EP2018/058180
(87) International publication number: WO 2019/185152

(56) References cited:
- US-A- 5 611 910
- US-A1- 2002 065 581
- US-A1- 2005 145 137
- US-A1- 2012 278 026

## Description

### Technical Field

The present invention pertains in general to an asphalt mixing plant which includes a control unit. Further aspect relate to a method for operating an asphalt mixing plant and a computer program product for operating a control unit of an asphalt mixing plant.

### Background Art

In an asphalt mixing plant such as the one disclosed in US 2005/145137A1, an asphalt mixture is produced by a thermal mixing process of mineral rocks, fillers, bitumen and possibly additives. The production of an asphalt mixture is a complex procedure which is usually controlled by a central control unit.

There are generally two main production methods.

According to a continuous production method, the mixing process takes place in a continuous manner. More particularly, the individual components of the asphalt mixture are added continuously to the mixing process. This method is particularly suitable for large volumes with the same asphalt mixing recipe.

According to a discontinuous production method, pre-weighed components of the bituminous mixture are batch mixed in an asphalt mixer. This method is more flexible as it allows batch-by-batch changes of the asphalt mixing recipe. In addition, a higher mixing quality and subsequently a higher quality of the asphalt mixture is achieved.

An increased awareness and sensitivity for industrial emissions and corresponding regulatory frameworks result in an increasing need for monitoring, measuring and reducing emissions of such asphalt mixing plants. Such regulations include e.g. the German air pollution control regulation titled "Technical Instructions on Air Quality Control" ("Technische Anleitung zur Reinhaltung der Luft") and commonly referred to as the "TA Luft".

Due to the complex asphalt production process, it is difficult to predict emissions in a reliable way from the operating parameters of the plant.

Furthermore, end-of-pipe solutions such as adsorption filters may reduce the production capacity of the plant, and require additional investment costs which result in higher production costs.

### Disclosure of the Invention

One problem of an aspect of the invention is to provide an asphalt mixing plant that allows to control and/or reduce emissions in an efficient and reliable way.

In particular, aspects of the invention address the problem to provide asphalt mixing plants that allow on the one hand to comply with pertinent emission regulations, but on the other hand still facilitate an efficient production with limited constraints on the production capacity.

According to an embodiment of a first aspect of the invention, there is provided an asphalt mixing plant comprising a plurality of devices and an emission measurement unit configured to measure current emissions of the mixing plant and to provide current emission values. The asphalt mixing plant further comprises a plurality of process sensors which are configured to sense process parameters of the devices of the asphalt mixing plant. In addition, a control unit is provided which comprises an emission prediction unit. The control unit is configured to receive and process the current emission values from the emission measurement unit and to receive and process the process parameters from the plurality of process sensors. The control unit is further configured to compute, by means of the emission prediction unit, a prediction of average emission values of one or more target substances for a predefined target time interval and to perform an alert procedure or a plurality of alert procedures if a predefined threshold of the average emission values for the predefined target interval or a plurality of predefined thresholds is expected to be exceeded according to the prediction of the emission prediction unit. The alert procedure or the plurality of alert procedures comprise a plurality of actions to reduce the emissions.

Such an embodied asphalt mixing plant allows to operate the asphalt mixing plant in such a way that the average emission values of the predefined target interval are not exceeded and that the asphalt mixing plant complies with regulatory requirements which may specify maximum average emission values for such target intervals.

Hence the asphalt mixing plant according to embodiments of the invention is focused on the control of average emission values rather than the control of instantaneous peaks. This provides the advantage that singular emission peaks can be smoothed out and that the devices of the plant can be operated in an efficient, but nevertheless environmentally acceptable way. Furthermore, with such a configuration of the control unit, abrupt changes of the operating conditions and control parameters of the various devices may be avoided which in return may reduce for example energy consumption and wear and may increase the lifetime of the devices.

The emission measurement unit may be according to some embodiments a unit that is certified and calibrated by official authorities and that is particularly provided to monitor plant emissions for violations of the respective emission regulations. According to such an embodiment, the certified emission measurement unit has an interface that also provides the measured values externally and which is then used by the control unit and its emission prediction unit. Such certified emission measurement unit may be also referred to as Continuous Emission Measurement System (CEMS).

The control unit according to embodiments of the invention comprises an emission prediction unit which receives and processes the measured emission values from the emission measurement unit and computes from these measured emission values a prediction of the average emission values of the current target time interval. If the respective threshold is expected to be exceeded according to the computed prediction, the control unit performs an alert procedure or a plurality of alert procedures. Such an alert procedure may comprise a plurality of actions which aim at reducing the emissions in order to comply with the respective threshold.

In order to take the best course of action, the plurality of process sensors provide to the control unit an overview over the operation state of the various devices of the plant, in particular the devices or operating parameters, e.g. material temperatures or hot gas temperatures, that are the main cause for emissions. Then the control unit can decide in dependence on the various operating parameters which measures shall be taken to reduce the emissions for the corresponding target interval.

Such a scheme using predictions of target intervals which are based on real emission measurements is particularly suitable for asphalt mixing plants as a complete and reliable modelling of the emissions of asphalt mixing plants just from the operating parameters involves a greater uncertainty than with methods of the present invention. More particularly, such modelling is in many cases simply impossible due to properties variations of some of the processed materials, e.g. reclaimed asphalt (RA) .

According to some embodiments, the target interval may be an interval of 30 minutes or an interval of 1 day, in particular 1 calendar day. These are typical values that official authorities use for specifying maximum average emissions. Such values are e.g. specified in the German "TA Luft".

According to preferred embodiments, the control unit may be configured to regularly compute in parallel one or more predictions of average emission values for a first target time interval and one or more predictions of average emission values for a second target time interval. The first and the second target time interval have a different length. According to embodiments, the second target time interval is longer than the first target time interval. According to embodiments the first target time interval may be an interval of 30 minutes and the second target time interval a time interval of 1 calendar day.

Such a parallel observation and control of two different target time intervals may be used to control short term and long term target time intervals in parallel and to use the devices of the plant in an efficient but nevertheless environmentally acceptable way.

According to a preferred embodiment, the alert procedure is a staggered alert procedure. The staggered alert procedure comprises at least a first stage and a second stage. The control unit is configured to perform at the first stage a first set of actions for emission reduction and at the second stage a second set of actions for emission reduction.

Preferably, the staggered alarm procedure comprises as further stage a third stage. Then the control unit is configured to perform at the third stage a third set of actions to reduce emissions.

According to a further embodiment, the staggered alarm procedure comprises a fourth stage. Then the control unit is configured to perform at the fourth stage a fourth set of actions to reduce emissions.

Such a staggered alert procedure with subsequent stages allows a flexible and efficient control of the actions for emission reduction. In particular, it allows to assign according to a further embodiment less disruptive actions to the previous stages. More particularly, according to embodiments, the first set of actions may comprise actions which are less disruptive for the continued operation of the asphalt mixing plant than the actions of the second set of actions. Furthermore, for embodiments with a third stage the second set of actions may comprise actions which are less disruptive for the continued operation of the asphalt mixing plant than the actions of the third set of actions.

Furthermore, for embodiments with a fourth stage, the third set of actions may comprise actions which are less disruptive for the continued operation of the asphalt mixing plant than the actions of the fourth set.

Less disruptive actions may be in particular actions that allow to continue the asphalt production only with small modifications that have a rather small or moderate influence on the efficiency of the production, the throughput of the production and/or the production capacity.

According to some embodiments, the first set of actions, the second set of actions, the third set of actions and/or the fourth set of actions comprise(s) issuing an alert message to an operator of the asphalt mixing plant. Such an alert message may be e.g. a warning that the respective threshold is expected to be exceeded and that actions need to be taken or will be taken, either manually by an operator or automatically by the control unit and its emission prediction unit.

According to embodiments, the first set of actions and/or the second set of actions comprises issuing one or more action recommendations to an operator of the asphalt mixing plant. The control unit is configured to issue the action recommendations in dependence on the current operating parameters of the asphalt mixing plant.

The issuance of such action recommendations provides some flexibility and discretion for the operator to decide on the best suitable actions. Furthermore, such action recommendations may include actions that may not be automatically performed by the control unit.

According to embodiments, the first set of actions and/or the second set of actions comprises changing automatically, by the control unit, operating parameters of one or more of the plurality of devices of the asphalt mixing plant.

Actions that are performed automatically are preferably actions that do not need the discretion of the operator. In particular, such actions may comprise actions that are mandatory to avoid an exceeding of the threshold and need to be taken immediately without further delay.

According to embodiments, the third set of actions comprises initiating automatically, by the control unit, end-of-pipe actions and/or active treatment steps as supplementary measures to reduce the emissions.

End-of-pipe actions may be defined as actions that do not change the production process as such, but use downstream measures to reduce the emissions.

Active treatment steps may be defined as active steps that are taken within the production process to reduce the emissions.

End-of-pipe actions and/or active treatment steps may encompass changing associated operating parameters of the asphalt mixing plant.

Such end-of-pipe actions and active treatment steps can only be taken if a corresponding technology has been installed on the plant. End-of-pipe actions may encompass for example adsorption filters or exhaust gas washing. Active treatment steps include e.g. lime injection or carbamide (urea) injection. As end-of-pipe actions and active treatment steps usually reduce the efficiency and/or capacity of the production, they are according to preferred embodiments only activated at the third stage of the staggered alert procedure to avoid an unnecessary activation.

According to embodiments, the third set of actions (in case of a total of three sets of actions) or the fourth set of actions (in case of a total of four sets of actions) comprises shutting down any feeding and dosing of reclaimed asphalt to the asphalt mixing plant and/or to the asphalt mixture.

As the reclaimed asphalt is a major source for emissions, in particular VOC emissions, this measure is very efficient in terms of emission reduction. However, it may significantly increase the production costs. Hence as this measure is only taken as a kind of last resort, the asphalt mixing plant according to embodiments of the invention provides an advantageous overall efficiency and an advantageous balance between efficiency and capacity of production on the one hand and compliance with emission regulations on the other hand.

According to embodiments, the staggered alert procedure comprises starting a timer after entering the first stage and evaluating, upon expiration of the timer, whether the predefined threshold will still be exceeded according to the current prediction of the emission prediction unit. If the predefined threshold of the average emission value will still be exceeded according to a latest prediction of the emission prediction unit, the control unit will automatically enter the second stage. If, on the other hand, the predefined threshold will not be exceeded anymore according to a latest prediction of the emission prediction unit, the control unit will terminate the actions of the first stage and/or indicate to the operator that the actions can be terminated.

Such an automatic entering of the second stage ensures that there is no further delay in taking actions if the actions of the first stage are not sufficient.

According to embodiments, the staggered alert procedure comprises starting a timer after entering the second stage and evaluating, upon expiration of the timer, whether the predefined threshold will still be exceeded according to a latest prediction of the emission prediction unit. If the predefined threshold of the average emission value will still be exceeded according to a latest prediction of the emission prediction unit, the control unit will automatically enter the third stage. On the contrary, if the predefined threshold will not be exceeded anymore according to the latest prediction of the emission prediction unit, the control unit will terminate the actions of the first and the second stage and/or will indicate to the operator that the actions have been or can be terminated.

Such an automatic entering of the third stage ensures that there is no further delay in taking actions if the actions of the second stage are not sufficient.

According to an embodiment, the control unit comprises a memory. The memory is configured to store a look-up table and the look-up table comprises an action matrix. This is an efficient and reliable way for implementing a decision logic into the control unit. The action matrix may comprise the actions to be taken in dependence on the stage, the operating parameters of the plant, the target substance(s) and/or the respective configuration of the plant.

According to embodiments, the emission prediction unit is configured to compute by a first prediction method a linear prediction based on a linear extrapolation of measured emission values, in particular measured intermediate average emission values of subintervals of the target interval, and by a second prediction method a measured intermediate average emission value of the latest sub-interval of the target interval.

According to embodiments, the emission prediction unit is further configured to compute by a third prediction method a measured current average emission value of the previous sub-intervals of the target interval.

With such different prediction methods different sensitivities and responsiveness for emission changes may be implemented. While a linear prediction reacts usually rather fast to emission changes, an average emission value of a single sub-interval or of all the previous sub-intervals of the respective target interval usually reacts slower.

According to a preferred embodiment, the control unit is configured to enter the first stage if the threshold is expected to be exceeded according to the first prediction method.

According to a preferred embodiment, the control unit is configured to enter the second stage if the threshold is expected to be exceeded according to the second prediction method and/or the third prediction method.

According to a preferred embodiment, the control unit is configured to enter the third stage if the threshold is expected to be exceeded according to the second prediction method and/or the third prediction method.

Such an embodiment has the advantage that the first stage is activated rather fast, while for the second and the third stage a kind of confirmation of the first (fast) prediction method by the second and/or the third (slow) prediction method(s) is needed before it is entered.

According to an embodiment, the control unit is configured to switch off any actions of the alert procedure, in particular the actions of the first, the second and/or the third set, if the threshold is expected to go below the threshold according to the first prediction method as well as according to the second prediction method.

According to an embodiment, the control unit is configured to switch off any actions of the alert procedure, if the threshold is expected to go below the threshold according to the first prediction method as well as according to the third prediction method.

According to an embodiment, the control unit is configured to switch off any actions of the alert procedure, if the threshold is expected to go below the threshold according to the first prediction method, the second prediction method and the third prediction method.

Such embodiments may ensure that the actions are only switched off if they are really not needed anymore.

According to embodiments, the first set of actions may comprise reducing the feed rate of reclaimed asphalt, increasing the feed rate of virgin aggregate, checking settings of burners of the asphalt mixing plant, reducing the material temperature, in particular the outlet material temperature, of hot reclaimed asphalt, reducing the material temperature of an asphalt mixture in a mixer of the plant and/or reducing the content of reclaimed asphalt in the asphalt mixture material.

Such actions have been found to be particularly efficient for emission reduction.

According to embodiments, the second set of actions may comprise blocking, in particular automatic blocking, of an increase of burner loads of burners of the asphalt mixing plant, in particular of a burner of a virgin aggregate drum and/or a burner of a reclaimed asphalt drum. The second set of actions may further comprise reducing the temperature of hot reclaimed asphalt to an adjustable target temperature or regulating burner loads according to the adjustable target temperature of the hot reclaimed asphalt, in particular the burner load of a burner of a virgin aggregate drum and/or the burner load of a burner of a reclaimed asphalt drum. The second set of actions may further comprise reducing the feed rate of reclaimed asphalt to the reclaimed asphalt drum by a predefined percentage and/or reducing the dosing rate of cold and/or hot reclaimed asphalt by a predefined percentage.

Such actions have been found to be particularly efficient for emission reduction.

According to an embodiment of another aspect of the invention, a method for operating an asphalt mixing plant is provided. The asphalt mixing plant comprises a plurality of devices, an emission measurement unit, a plurality of process sensors and a control unit comprising an emission prediction unit. The method comprises steps of measuring, by the emission measurement unit, current emissions of the asphalt mixing plant and providing, by the emission measurement unit, current emission values to the control unit. A further step comprises sensing, by the process sensors, process parameters of the devices of the asphalt mixing plant. Further steps encompass receiving, by the control unit the current emission values from the emission measurement unit, receiving, by the control unit, the process parameters from the plurality of process sensors and computing, by the emission prediction unit, a prediction of average emission values of one or more target substances for a predefined target time interval. Further steps comprise performing, by the control unit, an alert procedure if a predefined threshold of the average emission values for the predefined target interval is expected to be exceeded according to the prediction of the emission prediction unit.

According to an embodiment of another aspect of the invention, a computer program product for operating a control unit of an asphalt mixing plant is provided. The control unit comprises an emission prediction unit. The asphalt mixing plant comprises a plurality of devices, an emission measurement unit configured to measure current emissions of the asphalt mixing plant and a plurality of process sensors. The computer program product comprises a computer readable storage medium having program instructions embodied therewith. The program instructions are executable by the control unit to cause the control unit to perform a method comprising receiving, by the control unit the current emission values from the emission measurement unit and receiving, by the control unit, process parameters from the plurality of process sensors. Further steps comprise computing, by the emission prediction unit, a prediction of average emission values of one or more target substances for a predefined target time interval and performing, by the control unit, an alert procedure if a predefined threshold of the average emission values for the predefined target interval is expected to be exceeded according to the prediction of the emission prediction unit.

Features and advantages of one aspect of the invention may be applied to the other aspects of the invention as appropriate.

Other advantageous embodiments are listed in the dependent claims as well as in the description below.

### Brief Description of the Drawings

The invention will be better understood and objects other than those set forth above will become apparent from the following detailed description thereof. Such description makes reference to the annexed drawings, wherein:
FIG. 1 shows a schematic block diagram of an asphalt mixing plant according to an embodiment of the invention;
FIG. 2 shows a schematic block diagram of an emission measurement unit;
FIG. 3 shows a flow chart of a method for operating an asphalt mixing plant;
FIG. 4 shows a flow chart of a method for operating an asphalt mixing plant;
FIG. 5 shows a diagram illustrating an example of the computation of the prediction of the average emission values as performed by the emission prediction unit;
FIG. 6 shows a diagram illustrating another example of the computation of the prediction of the average emission values as performed by the emission prediction unit;
FIG. 7 shows a flow diagram of an asphalt mixing process and the associated devices of the asphalt mixing plant; and
FIG. 8 shows an action matrix according to an embodiment of the invention.

### Modes for Carrying Out the Invention

In the following description abbreviations as follows may be used:
AT Active treatment unit;
CE Control elements;
CS Control signals;
DAV Day average value or day mean value;
EM Emission measurement unit;
EP Emission prediction unit;
EOP End-of-pipe
EV Emission values;
HAV Half-hour average value or half-hour mean value;
Mem. Memory;
PP Process parameters;
Proc. Processor;
RA Reclaimed asphalt;
RAC Cold reclaimed asphalt;
RAH Hot reclaimed asphalt;
RAP Reclaimed asphalt pavement;
S Process sensors;
VA Virgin aggregate; and
VOC-C1 Volatile organic compounds, counted on carbon atoms;

The use of RAP may reduce the production costs and avoids asphalt waste.

Reclaimed asphalt may be added to the asphalt mixing process via a separate drum, e.g. a parallel drum, or a drum with ring addition.

Reclaimed asphalt may also be added directly into a mixer and/or a hot elevator of the asphalt mixing plant.

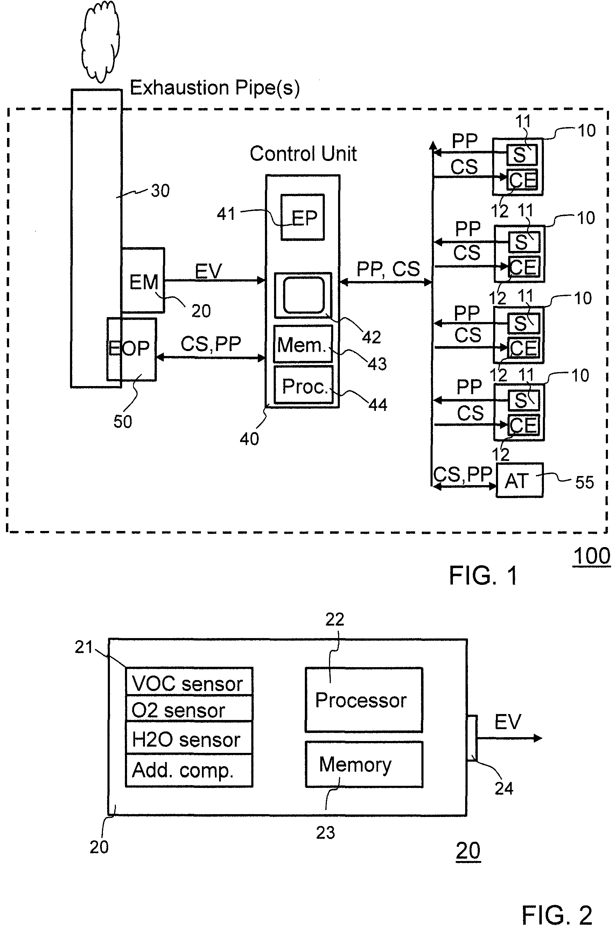

FIG. 1 shows a schematic block diagram of an asphalt mixing plant 100 according to an embodiment of the invention. The asphalt mixing plant 100 comprises a plurality of devices 10 that are used for the production of asphalt. Such devices 10 may include e.g. cold feeders, filters, reclaimed filler silos, dryers, burners, a mixing tower as well as bitumen and fuel systems.

The devices 10 may each comprise one or more process sensors 11, which are also indicated as process sensors S in FIG. 1. The process sensors 11 sense or measure process parameters of the devices 10 of the asphalt mixing plant 100.

The asphalt mixing plant 100 further comprises an emission measurement unit 20, also denoted as EM, which is configured to measure current emissions of the asphalt mixing plant 100. The emission measurement unit 20 may be arranged in particular at an exhaustion pipe 30 of the asphalt mixing plant. According to embodiments the asphalt mixing plant 100 may comprise a plurality of exhaustion pipes 30 and a plurality of associated emission measurement units 20. The exhaustion pipe 30 may generally represent any part of the asphalt mixing plant at which exhaustions are emitted.

In addition, the plant 100 comprises a control unit 40 comprising an emission prediction unit 41, also denoted as EP. The control unit 40 is configured to receive and process current emission values EV measured by the emission measurement unit 20 as well as to receive and process the process parameters PP from the plurality of process sensors 11.

The control unit 40 and more particularly the emission prediction unit 41 is configured to compute a prediction of average emission values of one or more target substances for a predefined target time interval. The control unit 40 is configured to observe the predictions and to initiate and perform an alert procedure if a predefined threshold of the average emission values for the predefined target interval of one or more target substance(s) is expected to be exceeded according to the prediction of the emission prediction unit 41.

The control unit 40 further comprises a display unit 42, a memory 43 and a processor 44.

The plurality of devices 10 comprise control elements 12, also denoted as CE, to control operating parameters of the devices 10. This allows to initiate actions, in particular control actions, to control and change the operation of the devices 10 in order to reduce the emissions and keep the emissions below the respective threshold of average emissions for the respective target time interval(s) of one or more target substance(s). Control signals CS are exchanged between the control unit 40 and the control elements CE.

The measured operating parameters of the process sensors 11 may be e.g. temperatures of the devices 11 or its components, pressures, feed rates or other operating parameters that may be influential on the emissions of the plant 100. More particularly the measured parameters may encompass a clean gas air flow, VA and RA burner loads and feed rates, VA, RA and asphalt mixture temperatures, bitumen type, fuel type and a corresponding asphalt mixing recipe.

The emission measurement unit 20 may be configured to measure CO, NOx, SOx, VOC-C1, O₂, H₂O and/or dust as emissions.

The control unit 40 may perform an analysis of the measurement data, in particular of the emission values measured by the emission measurement unit, according to the pertinent regulations or provisions of the responsible local authorities in its current version. Furthermore, a visualization may be displayed on the display unit 42. Furthermore, trends of the prediction of average emission values may be displayed. An exceeding of threshold values will trigger an alert procedure and subsequent actions in order to reduce the emissions as will be explained in more detail further below.

The control unit 40 may provide a "traffic light system" with the following 3 colour codes:
- green (everything ok, no actions required)
- orange (actions stage 1)
- red (actions stage 2 and 3)

The emission prediction unit 41 may also be able to generate production and/or emission reports, for example on VOC-C1 referring to the asphalt mixing recipe type.

In addition, the asphalt mixing plant 100 comprises at the exhaustion pipe 30 an end-of-pipe (EOP) unit 50, e.g. a VOC filter, and an active treatment unit 55, e.g. a unit for lime injection. The end-of-pipe unit 50 and the active treatment unit 55 may be controlled by the control unit 40 by means of control signals CS. Furthermore, the end-of-pipe unit 50 and the active treatment unit 55 may provide process parameters PP to the control unit. The emission measurement 20 measures the emissions after the end-of-pipe (EOP) unit 50.

FIG. 2 shows a more detailed embodiment of the emission measurement unit 20. The emission measurement unit 20 comprises a plurality of measurement sensors 21, which may encompass e.g. a VOC-C1 sensor, an oxygen (O₂) sensor, an H₂O sensor and sensors for additional further components. The emission measurement unit 20 further comprises a processor 22 for processing the sensor data from the sensors 21, a memory 23 and an interface 24 for providing the measured emission data / emission values to the control unit 40.

The data that is provided to the control unit 40 from the emission measurement unit 20 may come either directly from the sensors (e.g. the VOC-C1 sensor or the O₂ sensor) of the emission measurement unit 20 or from the processor 22. Necessary operating parameters are provided by the process sensors 11 of the asphalt mixing plant 100.

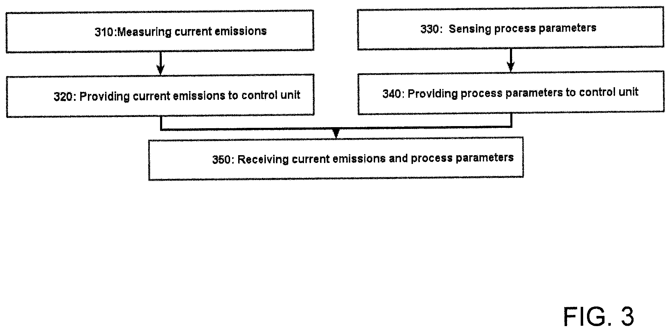

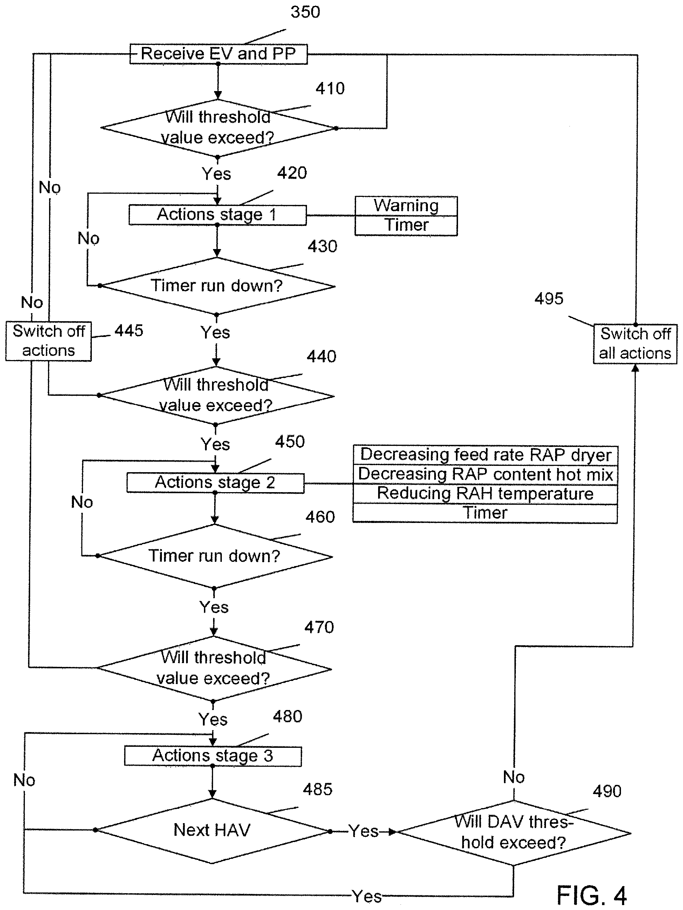

FIG. 3 and FIG. 4 show a flow chart of a method for operating an asphalt mixing plant, e.g. the asphalt mixing plant 100 as illustrated in FIG. 1.

More particularly, FIG. 3 shows the method steps that are performed by the emission measurement unit 20 and the process sensors 11, while FIG. 4 illustrates the method steps performed by the control unit 40 based on the data received from the emission measurement unit 20 and by the process sensors 11.

At a step 310, the emission measurement unit 20 measures the current emissions of the asphalt mixing plant and provides the measured current emission values at a step 320 to the control unit 40.

At a step 330, the process sensors 11 sense process parameters of the devices 10 and provide the process parameters at a step 340 to the control unit 40.

At a step 350, the control unit 40 receives the current emission values from the emission measurement unit 20 and the process parameters from the plurality of process sensors 11 and computes a prediction of average emission values for one or more target substances for one or more predefined target time intervals.

The steps 310-350 are performed continuously and/or in intervals and provide as step 350 the input data for the control method that is performed in parallel on the control unit 40 which is illustrated in more detail in FIG. 4 .

At a step 410, the emission prediction unit 41 of the control unit 40 computes a prediction of average emission values of one or more target substances for one or more predefined target time intervals and checks whether one or more predefined thresholds of the average emission values will be exceeded according to the prediction of the emission prediction unit 41.

The step 410 may be performed concurrently for a plurality of target substances. According to embodiments, CO, NOₓ, SOₓ, O₂, H₂O, VOC-C1 and dust may be measured as target substances by the emission measurement unit 20 and observed by the control unit 40.

The predefined target time interval may have various length. Particularly preferred target time intervals may have a length of 30 minutes and a length of 1 calendar day.

According to preferred embodiments, the control unit 40 computes in parallel predictions of average emissions values for a first target time interval and predictions of average emission values for a second target time interval.

In the following it is assumed that the control unit computes at step 410 in parallel predictions of average emission values for a target time interval of 30 minutes, also denoted as half-hour average value HAV, and for a target time interval of 1 calendar day, also denoted as day average value DAV.

If according to the prediction computed at step 410 the threshold for the HAV and/or the DAV is expected to be exceeded, the control unit 40 starts to perform an alert procedure in order to reduce the emissions. The alert procedure is a staggered alert procedure and starts at a step 420 with a first stage. At the first stage a first set of actions is performed. In particular, the control unit 40 issues on the display unit 42 as alert message a warning to an operator of the asphalt mixing plant that the HAV and/or the DAV will be exceeded. Furthermore, the control unit 40 starts a timer after entering the first stage.

In addition, the control unit 40 issues at the first stage a plurality of action recommendations to the operator on the display unit 42. The action recommendations are depending on the target substance and the measured process parameters of the process sensors 11. In order to decide on the best suitable recommendations, the control unit 40 may use an action matrix that is stored as look-up table in the memory 43 of the control unit.

The recommendations shown by the control unit 40 may be triggered by the responsible process sensor 11. E.g. if the material temperature of reclaimed asphalt is too high, a suggestion to reduce the reclaimed asphalt material temperature will be displayed.

The action recommendations issued by the control unit 40 depend on the respective target substance that is expected to be exceeded. In the following some preferred action recommendations are given for a selection of preferred target substances.

For the target substance of VOC-C1, action recommendations as follows may be issued:
- Reduce RA feed rate and increase VA feed rate;
- Adjust addition sequence of materials in mixing cycle;
- Reduce RAH material temperature, in particular RAH material outlet temperature;
- Reduce asphalt mixture material temperature;
- Reduce RAH and/or RAC content in asphalt mixture production;
- Check burner settings; and/or
- Check VA and/or RAH drum.

For the target substance of CO, action recommendations as follows may be issued:
- Check burner settings; and/or
- Change burner load(s).

For the target substance of NOₓ, action recommendations as follows may be issued:
- Check burner settings;
- Change burner load(s); and/or
- Check fuel properties (supplier and/or laboratory).

For the target substance of SOₓ, action recommendations as follows may be issued:
- Check fuel properties (supplier and/ot laboratory); and/or
- Check aggregate properties (supplier a/o laboratory).

The operator will then perform the corresponding actions in order to reduce the emissions.

Then, at a step 430, the control unit checks regularly whether the timer has run down. Then, upon expiration of the timer, the control unit evaluates/checks whether the predefined threshold of the respective target time interval, e.g. the HAV and/or the DAV, will still be exceeded according to the latest prediction computed by the emission prediction unit 41.

If it is expected according to the prediction that the threshold will not be exceeded anymore, the actions of the first stage may be switched off at a step 445, e.g. by the operator or automatically by the control unit.

If it is expected according to the prediction that one or more thresholds will still be exceeded, the control unit 40 will automatically enter the second stage. At a step 450, the control unit 40 will then perform a second set of actions.

In particular, the control unit 40 issues on the display unit 42 as alert message a warning to an operator of the asphalt mixing plant that the HAV and/or the DAV is expected to be exceeded. Furthermore, the control unit 40 starts a timer after entering the second stage.

Furthermore, the control unit 40 changes automatically one or more operating parameters of one or more of the plurality of devices 10 of the asphalt mixing plant.

These automatic actions are performed independently from the operator and take into account the current operating state of the devices 10 as sensed by the process sensors 11.

In order to decide on the best suitable actions, the control unit 40 may use again the action matrix that is stored as look-up table in the memory 43 of the control unit 40.

The actions which are performed automatically by the control unit 40 depend on the respective target substance that is expected to be exceeded. Furthermore, the actions depend on the respective configuration of the asphalt mixing plant, in particular whether the asphalt mixing plant processes cold reclaimed asphalt or hot reclaimed asphalt. While hot reclaimed asphalt is added via a separate drum to the mixer, cold reclaimed asphalt may be added directly into the mixer.

In the following, some preferred action recommendations are given for a selection of preferred target substances and configurations of the asphalt mixing plant:
For plants processing hot reclaimed asphalt, VOC-C1 may be reduced by
- Blocking for increasing burner load(s); and/or
- Reducing RAH material temperature to an adjustable target temperature; and/or
- Regulation of burner loads according to an adjustable target material temperature of the hot reclaimed asphalt, in particular the burner load of a burner of a virgin aggregate drum and/or the burner load of a burner of a reclaimed asphalt drum; and/or
- Reducing RAH feed rate by a certain percentage (e.g. 20 %, default value) below actual feed rate, including reducing burner load of a burner of a reclaimed asphalt drum; and/or
- Reducing RAH dosing rate by a certain percentage (e.g. 20 %, default value) below actual RAH dosing rate.

For plants processing cold reclaimed asphalt, VOC-C1 may be reduced by
- Reducing RAC dosing rate by a certain percentage (e.g. 20 %, default value) below actual RAC dosing rate; and/or
- A message to the operator to check asphalt mixing recipe parameters (point in time and duration of RAC addition and fresh bitumen addition; opening point of steam flap).

For the target substances CO and NOₓ, automated actions can only be taken with additional equipment. According to some embodiments, the asphalt mixing plant comprises such additional equipment, e.g. a lambda probe. In addition, the manual measures as suggested by stage 1 to the operator may be issued again.

Subsequently, at a step 460, the control unit 40 checks regularly whether the timer has run down. Then, upon expiration of the timer, the control unit evaluates/checks at a step 470, whether the predefined threshold of the respective target time interval, e.g. the HAV and/or the DAV, will still be exceeded according to the latest prediction computed by the emission prediction unit 41.

If it is expected according to the prediction that the threshold will not be exceeded anymore, the actions of the second stage may be switched off at a step 445, e.g. by the operator or automatically by the control unit.

If it is expected according to the prediction that one or more thresholds will still be exceeded, the control unit 40 will automatically enter the third stage. At a step 480, the control unit 40 will then perform a third set of actions. The third set of actions are preferably end-of-pipe actions and/or active treatment steps to reduce the emissions. More particularly, in the third stage filtering and/or exhaust gas treatment measures are automatically activated to reduce the emissions.

It should be noted that stage 3 actions can only be taken if a corresponding end-of-pipe solution, e.g. a VOC filter, or an active treatment installation, e.g. lime injection, is installed according to embodiments of the invention.

Stage 3 actions comprise also issuing a warning on the display unit 42 that the respective thresholds (HAV, DAV) will be exceeded and that the end-of-pipe actions or active treatment steps will automatically be activated.

Furthermore, the warning includes a message or instruction displayed on the display unit 42 that the production process/asphalt mixing process has to be adjusted according to the exhaust gas treatments recommendations. This may involve a required reduction of the production capacity.

According to embodiments the control unit 40 may comprise adjustable settings which may be adjusted by the customer/operator of the asphalt mixing plant according to his requirements. In particular, the logic of the control unit 40 for switching between stage 2 and stage 3 actions may be adjusted according to the customer's requirements. As an example, if an end-of-pipe solution is installed, it may be more economic for the operator of the plant to use the maximum possible amount of reclaimed asphalt pavement, having the end-of-pipe installation being switched on, instead of conserving capacity / life time of the end-of-pipe installation by not using it.

According to the embodiment of FIG. 4, it is assumed that the end-of-pipe actions and/or the active treatment steps will be continued until the end of the HAV period, which is monitored at step 485. However, according to other embodiments, also a timer may be started after entering the third stage and it may be checked after expiration of the timer whether the HAV threshold is still going to be exceeded.

If the current HAV period has expired, it is checked at a step 490 whether the DAV is still going to be exceeded according to the latest prediction. If the DAV is still going to be exceeded, the actions of stage 3 will be continued until also the prediction of the DAV will go below the threshold.

If this is the case, at a step 495, all current actions that have been automatically initiated at the second and/or the third stage will be switched off.

According to further embodiments, as a further stage, e.g. as a fourth stage, a shut-down of any feeding of reclaimed asphalt to the asphalt mixing plant may be provided. According to preferred embodiments, the focus will be on the main responsible cause of the exceeding emission target substance. For example, if VOC will be exceeded, the reclaimed asphalt feed a/o dosing may be shut down.

If no action will result in reducing the VOC emissions and an exceeding of the HAV or DAV is inevitable, the addition of any hot or cold reclaimed asphalt will be shut down for the corresponding period. More particularly, if a HAV will be exceeded, any addition of hot or cold reclaimed asphalt will blocked till the end of the HAV period. And if the DAV will be exceeded, any addition of hot or cold reclaimed asphalt will be blocked for the whole calendar day.

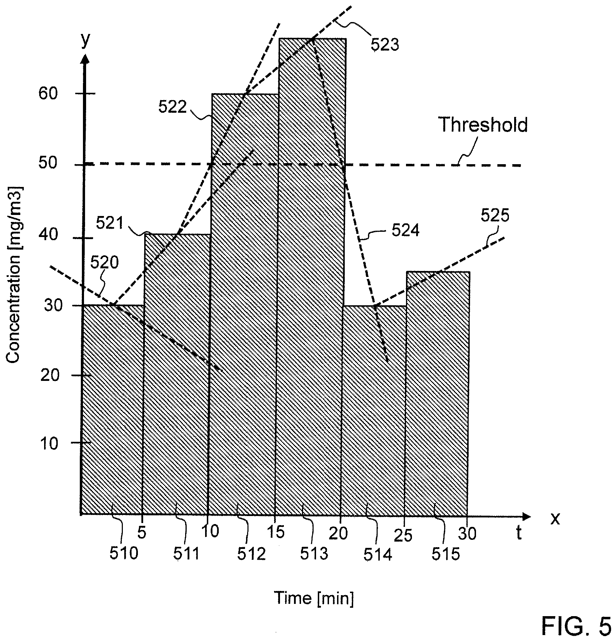

FIG. 5 shows a diagram illustrating an example of the computation of the prediction of the average emission values as performed by the emission prediction unit 41 of FIG. 1.

The x-axis denotes the time t of a target time interval. For example, the target time interval is an interval of half an hour and accordingly the control unit of the asphalt mixing plant shall ensure that an average emission value HAV shall not be exceeded for this target time interval.

The γ-axis denotes the concentration in mg/m³ of a target substance, e.g. of VOC-C1.

The threshold of the average emission values for the target time interval is in this example 50 mg/m³.

The emission prediction unit 41 determines for e.g. sub-intervals of 5 minutes measured intermediate average emission values. In other words, after each 5 minutes the emission prediction unit determines the average emission value for the last 5 minutes. These intermediate average emission values are illustrated by diagonally shaded areas in FIG. 5 and denoted with reference numeral 510-515.

The emission prediction unit 41 may use according to embodiments different methods for computing the prediction.

According to an embodiment, the prediction unit 41 uses as a first prediction method a linear prediction. According to this example the linear prediction is based on a linear extrapolation of the measured intermediate average emission values of the sub-intervals 510-515 of 5 minutes. The linear predictions result in a prediction graph which is updated every 5 minutes according to this example and illustrated by dotted lines. In this example the linear prediction graph encompasses linear predictions 520, 521, 522, 523, 524 and 525. The linear predictions 520, 521, 522, 523, 524 and 525 according to this example use the center of the respective sub-intervals as basis for the linear prediction. According to other embodiments, the beginning or the end of the respective sub-intervals may be used for the linear prediction. The linear prediction is rather sensitive to changes of the measured emission values. As an example, the first sub-interval 510 for the time period from 0 to 5 minutes has an average emission value of 30 mg/m³ and the second sub-interval 511 for the time period from 5 to 10 minutes has an average emission value of 40 mg/m³. The linear extrapolation of these two values provides the linear prediction 521 which goes over the threshold of 50 mg/m³ during the target time interval of 30 minutes. This linear extrapolation is used as prediction for entering the first stage. Accordingly, already after 10 minutes the control unit 40 would start to perform the alert procedure with the first set of actions of the first stage. Hence the linear prediction establishes an early warning which allows in particular to start in the first stage with actions which have a low depth of engagement on the asphalt production. As can be seen in FIG. 5, even though the average emission value of the second sub-interval 511 is with 40 mg/m³ still well below the threshold of 50 mg/m³, the actions of the first stage are already entered at the end of the second sub-interval 511.

In order to decide on the entering of the second stage and possibly the third stage, another prediction method is used which is denoted as 3second prediction method in the following. The second prediction method uses the respective measured intermediate average emission value of the latest sub-interval of 5 minutes as prediction. Accordingly, the second stage and possibly the third stage are only entered if the threshold which is computed according to the second prediction method is exceeded. Hence in this example the second stage is only entered when the average emission value of the sub-intervals of 5 minutes is above 50 mg/m³.

In this example this happens the first time in the third interval 512 between 10 and 15 minutes. Accordingly, after 15 minutes the second stage is entered automatically by the control unit 40 and the second set of actions for emission reduction is performed.

In the example of FIG. 5, also the fourth interval 513 between 15 and 20 minutes is above the threshold of 50 mg/m³, while in the fifth interval 514 and the sixth interval 515 the average emission value is back below the threshold which shows that the actions taken have been successful.

In order to decide whether to switch off the initiated actions, the control unit 40 may generally use a plurality of possible decision logics.

According to a preferred logic as illustrated in FIG. 5, the control unit 40 only switches the actions off if the average emission values for the half-hour interval is expected to go below the threshold of 50 mg/m³ according to the prediction of the first prediction method (linear prediction) as well as according to the prediction of the second prediction method (average of latest sub-interval). Hence the linear prediction must go below the threshold as well as the latest average emission value of the latest sub-interval of 5 minutes must be below the threshold for switching off the actions.

In the example of FIG. 5 this happens after 25 minutes. Then the linear prediction 524 is below the threshold as well as the latest average emission value of the sub-interval 514 between 20 and 25 minutes.

Such a switching back logic which is dependent on two predictions based on two different prediction methods has been proven to ensure in a reliable way that the respective threshold is kept and that the actions are not switched off too early.

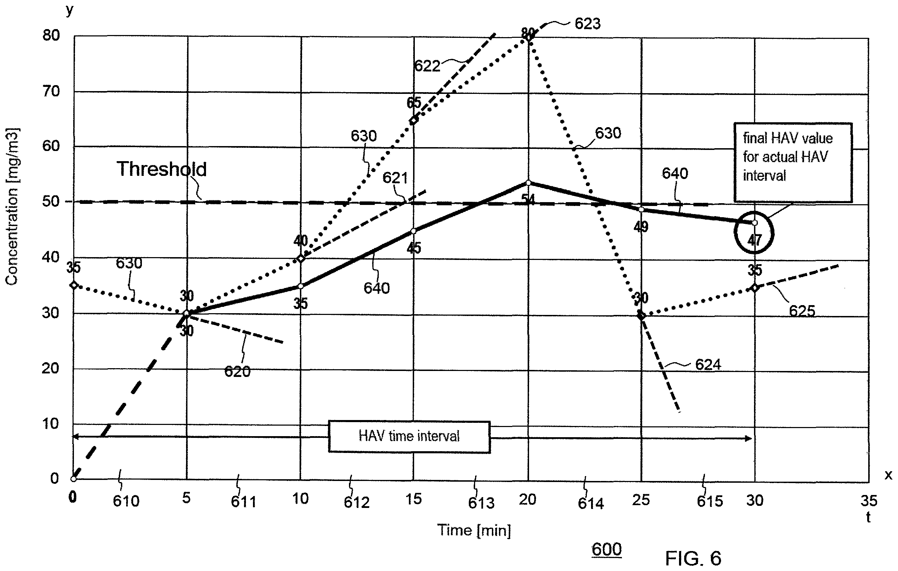

FIG. 6 shows a diagram illustrating another embodiment of the computation of the prediction of the average emission values as performed by the emission prediction unit 41 of FIG. 1.

The x-axis denotes again the time t of a target time interval of half an hour and accordingly the control unit of the asphalt mixing plant shall ensure that an average emission value HAV shall not be exceeded for this target time interval.

The γ-axis denotes the concentration in mg/m³ of a target substance, e.g. of VOC-C1.

The threshold of the average emission values for the target time interval is in this example again 50 mg/m³.

The emission prediction unit 41 determines for sub-intervals of 5 minutes measured intermediate average emission values. In other words, after each 5 minutes the emission prediction unit determines the average emission value for the last 5 minutes. These intermediate average emission values are illustrated by the dotted lines 630 which interpolate the individual intermediate average emission values determined at 5, 10, 15, 20, 25 and 30 minutes.

According to this embodiment, the prediction unit 41 uses as a first prediction method also a linear prediction. According to this embodiment, the linear prediction is based on a linear extrapolation of the measured intermediate average emission values of the sub-intervals 610-615 of 5 minutes. The linear predictions result in a prediction graph which is updated every 5 minutes according to this example and illustrated by dashed lines. In this example the linear prediction graph encompasses linear predictions 620, 621, 622, 623, 624 and 625. The linear predictions 620, 621, 622, 623, 624 and 625 according to this example use the beginning or in other words beginning points of the respective sub-intervals as time basis for the linear prediction. As an example, the first sub-interval 610 for the time period from 0 to 5 minutes has an average emission value of 30 mg/m³ and the second sub-interval 611 for the time period from 5 to 10 minutes has an average emission value of 40 mg/m³. The linear extrapolation of these two values provides, starting at the beginning of the sub-intervals 610 and 611 respectively, the linear prediction 621 that goes over the threshold of 50 mg/m³ during the target time interval of 30 minutes. This linear extrapolation is used as prediction for entering the first stage. Accordingly, already after 10 minutes the control unit 40 would start to perform the alert procedure with the first set of actions of the first stage. Hence the linear prediction establishes an early warning which allows in particular to start in the first stage with actions which have a low depth of engagement on the asphalt production. As can be seen in FIG. 6, even though the average emission value of the second sub-interval 611 is with 40 mg/m³ still well below the threshold of 50 mg/m³, the actions of the first stage are already entered at the end of the second sub-interval 611.

In order to decide on the entering of the second stage and possibly the third stage, another prediction method is used which is denoted as third prediction method in the following. In contrast to the second prediction method as described with reference to FIG. 5, the third prediction method uses measured current average emission values of all the previous sub-intervals of 5-minutes during the target time interval of 30 minutes as prediction. These measured current average emission values of all the previous sub-intervals are illustrated by the graph 640. Accordingly, the second stage and possibly the third stage are only entered if the threshold which is computed according to the third prediction method is exceeded. Hence in this example the second stage is only entered when the average emission value of all the previous 5-minutes sub-intervals of the target time interval of 30 minutes is above 50 mg/m³.

In this example this happens the first time after the fourth interval 613. More particularly, the sub-intervals 610, 611, 612 and 613 have average emission values of 30 mg/m³, 40 mg/m³, 65 mg/m³ and 80 mg/m³ respectively. The average of these four sub-intervals is app. 54 mg/m³ and hence exceeds the threshold of 50 mg/m³. Accordingly, after 20 minutes the second stage is entered automatically by the control unit 40 and the second set of actions for emission reduction is performed.

In the example of FIG. 6, after the fifth interval 614 the average emission value of the previous 5 sub-intervals 610-614 is with 49 mg/m³ already back below the threshold which shows that the actions taken have been successful.

In order to decide whether to switch off the initiated actions, the control unit 40 may again generally use a plurality of possible decision logics.

According to a preferred logic the control unit 40 may only switch the actions off if the average emission value for the half-hour interval is expected to go below the threshold of 50 mg/m³ according to the prediction of the first prediction method (linear prediction) as well as according to the prediction of the third prediction method (average of all the previous sub-intervals of the current target time interval). Hence the linear prediction must go below the threshold as well as the average emission value of the previous sub-interval of 5 minutes of the respective target time interval of 30 minutes must be below the threshold for switching off the actions.

In the example of FIG. 6 this happens after 25 minutes. Then the linear prediction 624 is below the threshold as well as the average emission value of 49 mg/m³ of the sub-intervals 610-614.

According to further embodiments, the decision logic for entering the respective stages (first, second third and further stages) may comprise other suitable combinations of the first, the second and the third prediction logic.

According to one embodiment, the control unit may only enter the second stage if the threshold is expected to be exceeded according to the second prediction method and the third prediction method. Likewise, the control unit may only enter the third stage if the threshold is expected to be exceeded according to the second prediction method and the third prediction method.

According to further embodiments, the decision logic for switching the actions off may comprise other suitable combinations of the first, the second and the third prediction logic.

According to embodiments, the control unit 40 may only switch off the actions if the average emission values for the half hour interval is expected to go below the threshold of 50 mg/m³ according to the prediction of the first prediction method, the second prediction method and/or the third prediction method and/or another prediction method.

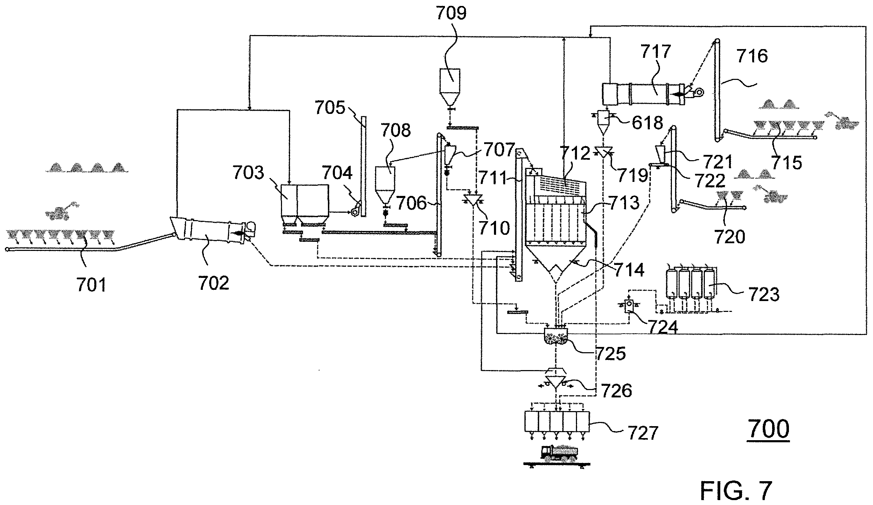

FIG. 7 illustrates in an exemplary way a simplified flow diagram 700 of an asphalt mixing process according to an embodiment of the invention. The asphalt mixing plant comprises a plurality of VA cold feeder units 701, a VA drying/heating drum 702 including a burner, a filter 703, an exhaust gas blower 704 and an exhaustion pipe 705. The asphalt mixing plant further comprises a reclaimed filler elevator 706, an intermediate reclaimed filler silo 707, a reclaimed filler silo 708, an imported filler silo 709, a filler scale 710 as well as a VA elevator 711, a screen 712, a hot VA silo 713 and a VA scale 714. The asphalt mixing plant further comprises a hot recycling asphalt (RAH) addition, including a plurality of (cold) RA feeder units 715, a RA elevator 716, a RA drying/heating drum 717 including a burner, a RAH buffer silo 718 with weighing appliance and a RAH scale 719. Furthermore, the asphalt mixing plant comprises a cold recycling asphalt (RAC) addition, including a plurality of (cold) RA feeder units 720, a RA buffer silo 721 and a RA belt scale 722. The asphalt mixing plant furthermore comprises a plurality of bitumen tanks 723 and a bitumen scale 724. The asphalt mixing plant further comprises a mixer 725, a skip 726 and a plurality of asphalt mixture storage silos 727.

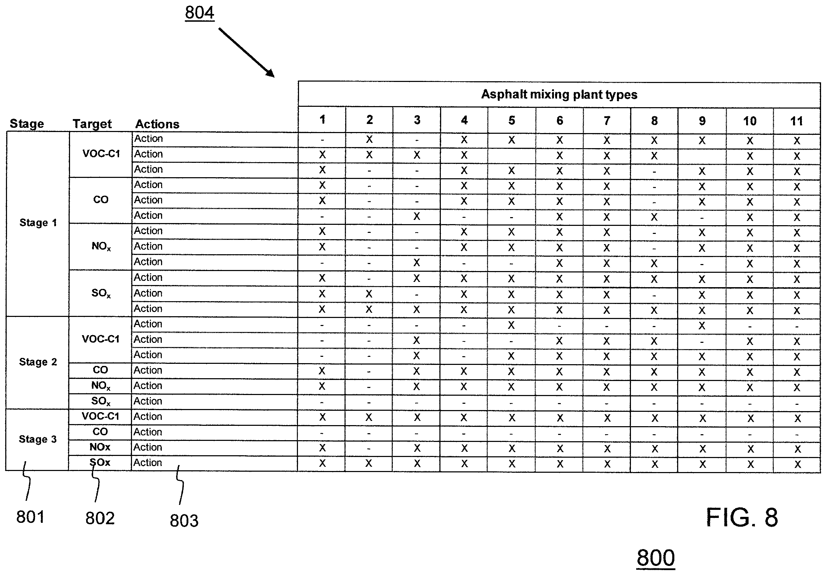

FIG. 8 shows an embodiment of an action matrix 800 which may be stored e.g. in the memory unit 43 of FIG. 1. The action matrix establishes a look-up table or in other words a decision logic according to which the control unit 40 can decide which actions have to be taken for the various stages of the alert procedure.

The action matrix 800 comprises a column 801 comprising three stages "stage 1", "stage 2" and "stage 3".

A column 802 represents various target substances/target gases which shall be observed, in this example VOC-C1, CO, NOₓ and SOₓ. A column 803 comprises a plurality of actions to be taken in dependence on the stage and the target substance. It should be noted that specific actions may be the same for two or more target substances and may hence occur more than once in column 803.

In addition, the action matrix 800 comprises a plurality of further columns, in this example 11 further columns, collectively referred to as columns 804. Each of the columns 804 represent a combination of possible asphalt mixing plant types. More particularly, according to this example the action matrix 700 comprises 11 different asphalt mixing plant types. For each of the 11 different plant types a cross indicates that the corresponding action is suitable for the respective plant type and a hyphen indicates that the corresponding action is not suitable for the respective plant type.

The plant types indicate in particular whether RA is used or not and which kind of recycling method is used. Possible recycling methods include RAC according to which cold RA is added directly into the mixer, while according to RAH the cold reclaimed asphalt is dried and heated and added in a hot state. According to RAH methods, the cold RA may be added via a ring to the virgin aggregate drying/heating drum and dried and heated therein, or separate (so-called parallel or RAH) reclaimed asphalt drying/heating drums may be used in co-flow or counter-flow operation to dry and heat the reclaimed asphalt.

Aspects of the present invention may be embodied as a system, in particular an asphalt mixing plant, a method, and/or a computer program product. The computer program product may include a computer readable storage medium (or media) having computer readable program instructions thereon for causing a processor, in particular the processor 44 of the control unit 40, to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

While there are shown and described presently preferred embodiments of the invention, it is to be distinctly understood that the invention is not limited thereto but may be otherwise variously embodied and practiced within the scope of the following claims.

## Claims

1. An asphalt mixing plant, comprising
a plurality of devices (10);
an emission measurement unit (20) configured to measure current emissions of the asphalt mixing plant and to provide current emission values;
a plurality of process sensors (11), the process sensors (11) being configured to sense process parameters of the devices (10) of the asphalt mixing plant;
a control unit (40) comprising an emission prediction unit (41), the control unit (40) being configured to
receive and process the current emission values from the emission measurement unit (20);
receive and process the process parameters from the plurality of process sensors (11);
compute, by the emission prediction unit (41), a prediction of average emission values of one or more target substances for a predefined target time interval; and
perform an alert procedure if a predefined threshold of the average emission values for the predefined target interval is expected to be exceeded according to the prediction of the emission prediction unit (41), the alert procedure comprising a plurality of actions for emission reduction.

2. An asphalt mixing plant according to claim 1, wherein
the alert procedure is a staggered alert procedure, the staggered alert procedure comprising at least a first stage and a second stage, wherein the control unit (40) is configured to perform at the first stage a first set of actions for emission reduction and at the second stage a second set of actions for emission reduction.

3. An asphalt mixing plant according to claim 2, wherein the staggered alarm procedure comprises a third stage, wherein the control unit (40) is configured to perform at the third stage a third set of actions for emission reduction.

4. An asphalt mixing plant according to claim 3, wherein the staggered alarm procedure comprises a fourth stage, wherein the control unit (40) is configured to perform at the fourth stage a fourth set of actions for emission reduction.

5. An asphalt mixing plant according to any of claims 2 to 4, wherein
the first set of actions comprises actions which are less disruptive for the continued operation of the asphalt mixing plant than the actions of the second set of actions; and/or
the second set of actions comprises actions which are less disruptive for the continued operation of the asphalt mixing plant than the actions of the third set of actions; and/or
the third set of actions comprises actions which are less disruptive for the continued operation of the asphalt mixing plant than the actions of the fourth set of actions.

6. An asphalt mixing plant according to any of claims 2 to 5, wherein the staggered alert procedure comprises
starting a timer after entering the first stage;
evaluating, upon expiration of the timer, whether the predefined threshold will still be exceeded according to the current prediction of the emission prediction unit;
entering automatically the second stage if the predefined threshold of the average emission value will still be exceeded according to a latest prediction of the emission prediction unit;
and
terminating the actions of the first stage if the predefined threshold will not be exceeded anymore according to a latest prediction of the emission prediction unit.

7. An asphalt mixing plant according to any of claims 3 to 6, wherein the staggered alert procedure comprises
starting a timer after entering the second stage;
evaluating, upon expiration of the timer, whether the predefined threshold will still be exceeded according to a latest prediction of the emission prediction unit;
entering automatically the third stage if the predefined threshold of the average emission value will still be exceeded according to a latest prediction of the emission prediction unit;
and
terminating the actions of the first and the second stage if the predefined threshold will not be exceeded anymore according to the latest prediction of the emission prediction unit.

8. An asphalt mixing plant according to any of claims 2 to 7, wherein the first set of actions, the second set of actions, the third set of actions and/or the fourth set of actions comprises issuing an alert message to an operator of the asphalt mixing plant.

9. An asphalt mixing plant according to any of claims 2 to 8, wherein the first set of actions and/or the second set of actions comprises issuing one or more action recommendations to an operator of the asphalt mixing plant, wherein the control unit (40) is configured to issue the action recommendations in dependence on the current operating parameters.

10. An asphalt mixing plant according to any of claims 2 to 9, wherein the first set of actions and/or the second set of actions comprises changing automatically, by the control unit (40), operating parameters of one or more of the plurality of devices (10) of the asphalt mixing plant.

11. An asphalt mixing plant according to any of claims 3 to 10, wherein the third set of actions comprises initiating automatically, by the control unit (40), end-of-pipe actions and/or active treatment steps to reduce the emissions.

12. An asphalt mixing plant according to any of claims 4 to 11, wherein the third set of actions or the fourth set of actions comprises shutting down any feeding and dosing of reclaimed asphalt to the asphalt mixing plant and/or to the asphalt mixture.

13. An asphalt mixing plant according to any of the preceding claims, wherein the control unit (40) comprises a memory (43) and wherein the memory (43) is configured to store a look-up table (700), the look-up table comprising an action matrix.

14. An asphalt mixing plant according to any of the preceding claims, wherein the emission prediction unit (41) is configured to compute
by a first prediction method a linear prediction based on a linear extrapolation, of measured emission values, in particular of measured intermediate average emission values of sub-intervals of the target interval; and/or
by a second prediction method a measured intermediate average emission value of the latest sub-interval of the target interval; and/or
by a third prediction method a measured current average emission value of the previous sub-intervals of the target interval.

15. An asphalt mixing plant according to claim 14, wherein
the control unit (40) is configured to
enter the first stage if the threshold is expected to be exceeded according to the first prediction method;
enter the second stage if the threshold is expected to be exceeded according to the second prediction method and/or the third prediction method; and/or
enter the third stage if the threshold is expected to be exceeded according to the second prediction method and/or the third prediction method.

16. An asphalt mixing plant according to claim 14 or claim 15, wherein
the control unit (40) is configured to switch off any actions of the alert procedure, in particular the actions of the first, the second and/or the third stage, if the threshold is expected to go below the threshold
according to the first prediction method as well as according to the second prediction method;or
according to the first prediction method as well as according to the third prediction method; or
according to the first prediction method, the second prediction method and the third prediction method.

17. An asphalt mixing plant according to any of claims 2 to 16, wherein
the first set of actions is selected from the group consisting of:
reducing the feed rate of reclaimed asphalt and increasing the feed rate of virgin aggregates;
checking burner settings of burners of the asphalt mixing plant;
reducing the material temperature, in particular the outlet material temperature, of hot reclaimed asphalt;
reducing the asphalt mixture material temperature of an asphalt mixture in a mixer of the plant; and
reducing the content of reclaimed asphalt in the asphalt mixture material.

18. An asphalt mixing plant according to any of claims 2 to 17, wherein
the second set of actions is selected from the group consisting of:
blocking of an increase of burner loads of burners of the asphalt mixing plant, in particular of a burner of a virgin aggregate drum and/or a burner of a reclaimed asphalt drum;
reducing the material temperature of hot reclaimed asphalt to an adjustable target temperature;
regulating burner loads according to an adjustable target material temperature of the hot reclaimed asphalt, in particular the burner load of a burner of a virgin aggregate drum and/or the burner load of a burner of a reclaimed asphalt drum;
reducing the feed rate of reclaimed asphalt by a predefined percentage; and
reducing the dosing rate of cold and/or hot reclaimed asphalt by a predefined percentage.

19. An asphalt mixing plant according to any of the preceding claims,
wherein the emission prediction unit (41) is configured to regularly compute in parallel one or more predictions of average emission values for a first target time interval and one or more predictions of average emission values for a second target time interval, wherein the second target time interval is longer than the first target time interval.

20. An asphalt mixing plant according to claim 19, wherein the first target time interval is a time interval of 30 minutes and the second target time interval is a time interval of 1 calendar day.

21. A method for operating an asphalt mixing plant, the asphalt mixing plant comprising a plurality of devices (10), an emission measurement unit (20), a plurality of process sensors (11) and a control unit (40) comprising an emission prediction unit (41), the method comprising
measuring, by the emission measurement unit (20), current emissions of the mixing plant;
providing, by the emission measurement unit (20), current emission values to the control unit;
sensing, by the process sensors (11), process parameters of the devices (10) of the asphalt mixing plant;
receiving, by the control unit (40) the current emission values from the emission measurement unit (20) ;
receiving, by the control unit (40), the process parameters from the plurality of process sensors (11) ;
computing, by the emission prediction unit (41), a prediction of average emission values of one or more target substances for a predefined target time interval; and
performing, by the control unit (40), an alert procedure if a predefined threshold of the average emission values for the predefined target interval is expected to be exceeded according to the prediction of the emission prediction unit (41).

22. A computer program product having program instructions executable by a control unit (40) of an asphalt mixing plant, the control unit (40) comprising an emission prediction unit (41), the asphalt mixing plant comprising a plurality of devices (10), an emission measurement unit (20) configured to measure current emissions of the asphalt mixing plant and a plurality of process sensors (11), Z wherein the program instructions, when executed by the control unit (40), cause the control unit to perform a method comprising
receiving, by the control unit (40) the current emission values from the emission measurement unit (20) ;
receiving, by the control unit (40), process parameters from the plurality of process sensors (11);
computing, by the emission prediction unit (41), a prediction of average emission values of one or more target substances for a predefined target time interval; and
performing, by the control unit (40), an alert procedure if a predefined threshold of the average emission values for the predefined target interval is expected to be exceeded according to the prediction of the emission prediction unit (41).

## Patentansprüche

1. Asphaltmischanlage, umfassend
eine Vielzahl von Vorrichtungen (10);
eine Emissionsmesseinheit (20), die so konfiguriert ist, dass sie aktuelle Emissionen der Asphaltmischanlage misst und aktuelle Emissionswerte bereitstellt;
eine Vielzahl von Verarbeitungssensoren (11), wobei die Verarbeitungssensoren (11) so konfiguriert sind, dass sie Verarbeitungsparameter der Vorrichtungen (10) der Asphaltmischanlage erfassen;
eine Steuereinheit (40) umfassend eine Emissionsvorhersageeinheit (41), wobei die Steuereinheit (40) konfiguriert ist zum
Empfangen und Verarbeiten der aktuellen Emissionswerte von der Emissionsmesseinheit (20);
Empfangen und Verarbeiten der Verarbeitungsparameter von der Vielzahl der Verarbeitungssensoren (11) ;
Berechnen, durch die Emissionsvorhersageeinheit (41), einer Vorhersage von durchschnittlichen Emissionswerten einer oder mehrerer Zielsubstanzen für ein vordefiniertes Zielzeitintervall; und
Durchführen eines Warnvorgangs, wenn erwartet wird, dass ein vordefinierter Schwellenwert der durchschnittlichen Emissionswerte für das vordefinierte Zielintervall gemäss der Vorhersage der Emissionsvorhersageeinheit (41) überschritten wird, wobei der Warnvorgang eine Vielzahl von Aktionen zur Emissionsreduktion umfasst.

2. Asphaltmischanlage nach Anspruch 1, wobei der Warnvorgang ein gestaffelter Warnvorgang ist, wobei der gestaffelte Warnvorgang mindestens eine erste Stufe und eine zweite Stufe umfasst, wobei die Steuereinheit (40) so konfiguriert ist, dass sie in der ersten Stufe einen ersten Satz von Aktionen zur Emissionsreduktion und in der zweiten Stufe einen zweiten Satz von Aktionen zur Emissionsreduktion durchführt.

3. Asphaltmischanlage nach Anspruch 2, wobei der gestaffelte Alarmvorgang eine dritte Stufe umfasst, wobei die Steuereinheit (40) so konfiguriert ist, dass sie in der dritten Stufe einen dritten Satz von Aktionen zur Emissionsreduktion durchführt.

4. Asphaltmischanlage nach Anspruch 3, wobei der gestaffelte Alarmvorgang eine vierte Stufe umfasst, wobei die Steuereinheit (40) so konfiguriert ist, dass sie in der vierten Stufe einen vierten Satz von Aktionen zur Emissionsreduktion durchführt.

5. Asphaltmischanlage nach einem der Ansprüche 2 bis 4, wobei
der erste Satz von Aktionen Aktionen umfasst, die für den fortdauernden Betrieb der Asphaltmischanlage weniger störend als die Aktionen des zweiten Satzes von Aktionen sind; und/oder
der zweite Satz von Aktionen Aktionen umfasst, die für den fortdauernden Betrieb der Asphaltmischanlage weniger störend als die Aktionen des dritten Satzes von Aktionen sind; und/oder
der dritte Satz von Aktionen Aktionen umfasst, die für den fortdauernden Betrieb der Asphaltmischanlage weniger störend als die Aktionen des vierten Satzes von Aktionen sind.

6. Asphaltmischanlage nach einem der Ansprüche 2 bis 5, wobei der gestaffelte Warnvorgang Folgendes umfasst
Starten eines Timers nach Starten der ersten Stufe;
Auswerten nach Ablauf des Timers, ob der vordefinierte Schwellenwert gemäss der aktuellen Vorhersage der Emissionsvorhersageeinheit immer noch überschritten wird;
automatisches Starten der zweiten Stufe, wenn der vordefinierte Schwellenwert des durchschnittlichen Emissionswerts gemäss einer letzten Vorhersage der Emissionsvorhersageeinheit immer noch überschritten wird;
und
Beenden der Aktionen der ersten Stufe, wenn der vordefinierte Schwellenwert gemäss einer letzten Vorhersage der Emissionsvorhersageeinheit nicht mehr überschritten wird.

7. Asphaltmischanlage nach einem der Ansprüche 3 bis 6, wobei der gestaffelte Warnvorgang Folgendes umfasst
Starten eines Timers nach Starten der zweiten Stufe;
Auswerten nach Ablauf des Timers, ob der vordefinierte Schwellenwert gemäss einer letzten Vorhersage der Emissionsvorhersageeinheit immer noch überschritten wird;
automatisches Starten der dritten Stufe, wenn der vordefinierte Schwellenwert des durchschnittlichen Emissionswerts gemäss einer letzten Vorhersage der Emissionsvorhersageeinheit immer noch überschritten wird;
und
Beenden der Aktionen der ersten und der zweiten Stufe, wenn der vordefinierte Schwellenwert gemäss der letzten Vorhersage der Emissionsvorhersageeinheit nicht mehr überschritten wird.

8. Asphaltmischanlage nach einem der Ansprüche 2 bis 7, wobei der erste Satz von Aktionen, der zweite Satz von Aktionen, der dritte Satz von Aktionen und/oder der vierte Satz von Aktionen das Ausgeben einer Warnmeldung an einen Bediener der Asphaltmischanlage umfasst.

9. Asphaltmischanlage nach einem der Ansprüche 2 bis 8, wobei der erste Satz von Aktionen und/oder der zweite Satz von Aktionen das Ausgeben einer oder mehrerer Aktionsempfehlungen an einen Bediener der Asphaltmischanlage umfasst, wobei die Steuereinheit (40) konfiguriert ist, um die Aktionsempfehlungen in Abhängigkeit von den aktuellen Betriebsparametern auszugeben.

10. Asphaltmischanlage nach einem der Ansprüche 2 bis 9, wobei der erste Satz von Aktionen und/oder der zweite Satz von Aktionen das automatische Ändern, durch die Steuereinheit (40), von Betriebsparametern einer oder mehrerer aus der Vielzahl von Vorrichtungen (10) der Asphaltmischanlage umfasst.

11. Asphaltmischanlage nach einem der Ansprüche 3 bis 10, wobei der dritte Satz von Aktionen das automatische Starten von End-of-Pipe-Aktionen und/oder aktiven Behandlungsschritten zur Emissionsreduktion durch die Steuereinheit (40) umfasst.

12. Asphaltmischanlage nach einem der Ansprüche 4 bis 11, wobei der dritte Satz von Aktionen oder der vierte Satz von Aktionen das Abschalten jeglicher Zufuhr und Dosierung von Recyclingasphalt zur Asphaltmischanlage und/oder zum Asphaltgemisch umfasst.

13. Asphaltmischanlage nach einem der vorhergehenden Ansprüche, wobei die Steuereinheit (40) einen Speicher (43) umfasst und wobei der Speicher (43) so konfiguriert ist, dass er eine Nachschlagetabelle (700) speichert, wobei die Nachschlagetabelle eine Aktionsmatrix umfasst.

14. Asphaltmischanlage nach einem der vorhergehenden Ansprüche, wobei die Emissionsvorhersageeinheit (41) konfiguriert ist zum Berechnen
durch ein erstes Vorhersageverfahren, einer linearen Vorhersage, basierend auf einer linearen Extrapolation, von gemessenen Emissionswerten, insbesondere von gemessenen intermediären durchschnittlichen Emissionswerten von Subintervallen des Zielintervalls; und/oder
durch ein zweites Vorhersageverfahren, eines gemessenen intermediären durchschnittlichen Emissionswertes des letzten Subintervalls des Zielintervalls; und/oder
durch ein drittes Vorhersageverfahren, eines gemessenen aktuellen durchschnittlichen Emissionswerts der vorherigen Subintervalle des Zielintervalls.

15. Asphaltmischanlage nach Anspruch 14, wobei die Steuereinheit (40) konfiguriert ist zum
Starten der ersten Stufe, wenn gemäss dem ersten Vorhersageverfahren ein Überschreiten des Schwellenwerts zu erwarten ist;
Starten der zweiten Stufe, wenn gemäss dem zweiten Vorhersageverfahren und/oder dem dritten Vorhersageverfahren ein Überschreiten des Schwellenwerts zu erwarten ist; und/oder
Starten der dritten Stufe, wenn gemäss dem zweiten Vorhersageverfahren und/oder dem dritten Vorhersageverfahren ein Überschreiten des Schwellenwerts zu erwarten ist.

16. Asphaltmischanlage nach Anspruch 14 oder Anspruch 15, wobei
die Steuereinheit (40) so konfiguriert ist, dass sie alle Aktionen des Warnvorgangs, insbesondere die Aktionen der ersten, der zweiten und/oder der dritten Stufe, ausschaltet, wenn zu erwarten ist, dass der Schwellwert unterschritten wird
sowohl gemäss dem ersten Vorhersageverfahren als auch gemäss dem zweiten Vorhersageverfahren; oder
sowohl gemäss dem ersten Vorhersageverfahren als auch gemäss dem dritten Vorhersageverfahren; oder
gemäss dem ersten Vorhersageverfahren, dem zweiten Vorhersageverfahren und dem dritten Vorhersageverfahren.

17. Asphaltmischanlage nach einem der Ansprüche 2 bis 16, wobei
der erste Satz von Aktionen aus der Gruppe ausgewählt wird, die aus Folgendem besteht:
Verringern der Zufuhrrate von Recyclingasphalt und Erhöhen der Zufuhrrate von fabrikneuen Aggregaten;
Überprüfen der Brennereinstellungen von Brennern der Asphaltmischanlage;
Verringern der Materialtemperatur, insbesondere der Materialaustrittstemperatur, von heissem Recyclingasphalt;
Verringern der Temperatur eines Asphaltgemisches in einem Mischer der Anlage; und
Verringern des Gehalts an Recyclingasphalt im Asphaltmischgut.

18. Asphaltmischanlage nach einem der Ansprüche 2 bis 17, wobei
der zweite Satz von Aktionen aus der Gruppe ausgewählt wird, die aus Folgendem besteht:
Blockieren einer Erhöhung der Brennerleistungen von Brennern der Asphaltmischanlage, insbesondere eines Brenners einer Trommel für Neumineral und/oder eines Brenners einer Trommel für Recyclingasphalt;
Verringern der Materialtemperatur des heissen Recyclingasphalts auf eine einstellbare Zieltemperatur;
Regulieren der Brennerbelastung gemäss einer einstellbaren Zielmaterialtemperatur des heissen Recyclingasphalts, insbesondere der Brennerbelastung eines Brenners einer Trommel für fabrikneue Aggregate und/oder der Brennerbelastung eines Brenners für eine Trommel für Recyclingasphalt;
Verringern der Zufuhrrate des Recyclingasphalts um einen vordefinierten Prozentsatz; und
Verringern der Dosierungsrate von kaltem und/oder heissem Recyclingasphalt um einen vordefinierten Prozentsatz.

19. Asphaltmischanlage nach einem der vorhergehenden Ansprüche,
wobei die Emissionsvorhersageeinheit (41) so konfiguriert ist, dass sie regelmässig parallel eine oder mehrere Vorhersagen von durchschnittlichen Emissionswerten für ein erstes Zielzeitintervall und eine oder mehrere Vorhersagen von durchschnittlichen Emissionswerten für ein zweites Zielzeitintervall berechnet, wobei das zweite Zielzeitintervall länger ist als das erste Zielzeitintervall.

20. Asphaltmischanlage nach Anspruch 19, wobei das erste Zielzeitintervall ein Zeitintervall von 30 Minuten ist und das zweite Zielzeitintervall ein Zeitintervall von 1 Kalendertag ist.

21. Verfahren zum Betreiben einer Asphaltmischanlage, wobei die Asphaltmischanlage eine Vielzahl von Vorrichtungen (10), eine Emissionsmesseinheit (20), eine Vielzahl von Verarbeitungssensoren (11) und eine Steuereinheit (40) umfassend einer Emissionsvorhersageeinheit (41) umfasst, wobei das Verfahren Folgendes umfasst
Messen, durch die Emissionsmesseinheit (20), der aktuellen Emissionen der Mischanlage;
Bereitstellen, durch die Emissionsmesseinheit (20), von aktuellen Emissionswerten an die Steuereinheit;
Erfassen, durch die Verarbeitungssensoren (11), von Verarbeitungsparametern der Vorrichtungen (10) der Asphaltmischanlage;
Empfangen, durch die Steuereinheit (40), der aktuellen Emissionswerte von der Emissionsmesseinheit (20) ;
Empfangen, durch die Steuereinheit (40), der Verarbeitungsparameter von der Vielzahl der Verarbeitungssensoren (11);
Berechnen, durch die Emissionsvorhersageeinheit (41), einer Vorhersage von durchschnittlichen Emissionswerten einer oder mehrerer Zielsubstanzen für ein vordefiniertes Zielzeitintervall; und
Durchführen, durch die Steuereinheit (40), eines Warnvorgangs, wenn zu erwarten ist, dass ein vordefinierter Schwellenwert der durchschnittlichen Emissionswerte für das vordefinierte Zielintervall gemäss der Vorhersage der Emissionsvorhersageeinheit (41) überschritten wird.

22. Computerprogrammprodukt mit Programmanweisungen, die von einer Steuereinheit (40) einer Asphaltmischanlage ausführbar sind, wobei die Steuereinheit (40) eine Emissionsvorhersageeinheit (41) umfasst, wobei die Asphaltmischanlage eine Vielzahl von Vorrichtungen (10), eine Emissionsmesseinheit (20), die konfiguriert ist, um aktuelle Emissionen der Asphaltmischanlage zu messen, und eine Vielzahl von Verarbeitungssensoren (11) umfasst, wobei die Programmanweisungen, wenn sie von der Steuereinheit (40) ausgeführt werden, die Steuereinheit veranlassen, ein Verfahren durchzuführen, das Folgendes umfasst
Empfangen, durch die Steuereinheit (40), der aktuellen Emissionswerte von der Emissionsmesseinheit (20) ;
Empfangen, durch die Steuereinheit (40), der Verarbeitungsparameter von der Vielzahl der Verarbeitungssensoren (11);
Berechnen, durch die Emissionsvorhersageeinheit (41), einer Vorhersage von durchschnittlichen Emissionswerten einer oder mehrerer Zielsubstanzen für ein vordefiniertes Zielzeitintervall; und
Durchführen, durch die Steuereinheit (40), eines Warnvorgangs, wenn zu erwarten ist, dass ein vordefinierter Schwellenwert der durchschnittlichen Emissionswerte für das vordefinierte Zielintervall gemäss der Vorhersage der Emissionsvorhersageeinheit (41) überschritten wird.

## Revendications

1. Installation de mélange d'asphalte, comprenant
une pluralité de dispositifs (10) ;
une unité de mesure d'émissions (20) conçue pour mesurer les émissions actuelles de l'installation de mélange d'asphalte et pour fournir des valeurs d'émissions actuelles ;
une pluralité de capteurs de procédé (11), les capteurs de procédé (11) étant conçus pour détecter les paramètres de procédé des dispositifs (10) de l'installation de mélange d'asphalte ;
une unité de commande (40) comprenant une unité de prédiction d'émissions (41), l'unité de commande (40) étant conçue pour
recevoir et traiter les valeurs d'émissions actuelles provenant de l'unité de mesure d'émissions (20) ;
recevoir et traiter les paramètres de procédé provenant de la pluralité de capteurs de procédé (11) ;
calculer, par l'unité de prédiction d'émissions (41), une prédiction de valeurs d'émission moyennes d'une ou plusieurs substances cibles pour un intervalle de temps cible prédéfini ; et
exécuter une procédure d'alerte s'il est prévu qu'un seuil prédéfini des valeurs d'émissions moyennes pour l'intervalle cible prédéfini soit dépassé conformément à la prédiction de l'unité de prédiction d'émissions (41), la procédure d'alerte comprenant une pluralité d'actions pour réduire les émissions.

2. Installation de mélange d'asphalte selon la revendication 1, dans laquelle
la procédure d'alerte est une procédure d'alerte échelonnée, la procédure d'alerte échelonnée comprenant au moins une première étape et une deuxième étape, dans laquelle l'unité de commande (40) est conçue pour effectuer à la première étape un premier ensemble d'actions pour réduire les émissions et à la deuxième étape un deuxième ensemble d'actions pour réduire les émissions.

3. Installation de mélange d'asphalte selon la revendication 2, dans laquelle la procédure d'alarme échelonnée comprend une troisième étape, dans laquelle l'unité de commande (40) est conçue pour effectuer à la troisième étape un troisième ensemble d'actions pour réduire les émissions.

4. Installation de mélange d'asphalte selon la revendication 3, dans laquelle la procédure d'alarme échelonnée comprend une quatrième étape, dans laquelle l'unité de commande (40) est conçue pour effectuer à la quatrième étape un quatrième ensemble d'actions pour réduire les émissions.

5. Installation de mélange d'asphalte selon l'une quelconque des revendications 2 à 4, dans laquelle
le premier ensemble d'actions comprend des actions qui sont moins perturbatrices pour le fonctionnement continu de l'installation de mélange d'asphalte que les actions du deuxième ensemble d'actions ; et/ou
le deuxième ensemble d'actions comprend des actions qui sont moins perturbatrices pour le fonctionnement continu de l'installation de mélange d'asphalte que les actions du troisième ensemble d'actions ; et/ou
le troisième ensemble d'actions comprend des actions qui sont moins perturbatrices pour le fonctionnement continu de l'installation de mélange d'asphalte que les actions du quatrième ensemble d'actions.

6. Installation de mélange d'asphalte selon l'une quelconque des revendications 2 à 5, dans laquelle la procédure d'alerte échelonnée comprend
le démarrage d'un minuteur après l'entrée dans la première étape ;
l'évaluation, lors de l'expiration du minuteur, si le seuil prédéfini sera encore dépassé conformément à la prédiction actuelle de l'unité de prédiction d'émissions ;
l'entrée automatique dans la deuxième étape si le seuil prédéfini de la valeur d'émissions moyenne est encore dépassé conformément à une dernière prédiction de l'unité de prédiction d'émissions ;
et
la fin des actions de la première étape si le seuil prédéfini n'est plus dépassé conformément à une dernière prédiction de l'unité de prédiction d'émissions.

7. Installation de mélange d'asphalte selon l'une quelconque des revendications 3 à 6, dans laquelle la procédure d'alerte échelonnée comprend
le démarrage d'un minuteur après l'entrée dans la deuxième étape ;
l'évaluation, lors de l'expiration du minuteur, si le seuil prédéfini est encore dépassé conformément à une dernière prédiction de l'unité de prédiction d'émissions ;
l'entrée automatique dans la troisième étape si le seuil prédéfini de la valeur d'émissions moyenne est encore dépassé conformément à une dernière prédiction de l'unité de prédiction d'émissions ;
et
la fin des actions de la première et de la deuxième étape si le seuil prédéfini n'est plus dépassé conformément à la dernière prédiction de l'unité de prédiction d'émissions.

8. Installation de mélange d'asphalte selon l'une quelconque des revendications 2 à 7, dans laquelle le premier ensemble d'actions, le deuxième ensemble d'actions, le troisième ensemble d'actions et/ou le quatrième ensemble d'actions comprennent l'émission d'un message d'alerte à un opérateur de l'installation de mélange d'asphalte.

9. Installation de mélange d'asphalte selon l'une quelconque des revendications 2 à 8, dans laquelle le premier ensemble d'actions et/ou le deuxième ensemble d'actions comprend l'émission d'une ou plusieurs recommandations d'action à un opérateur de l'installation de mélange d'asphalte, dans laquelle l'unité de commande (40) est conçue pour émettre les recommandations d'action en fonction des paramètres de fonctionnement actuels.

10. Installation de mélange d'asphalte selon l'une quelconque des revendications 2 à 9, dans laquelle le premier ensemble d'actions et/ou le deuxième ensemble d'actions comprend la modification automatique, par l'unité de commande (40), des paramètres de fonctionnement d'un ou plusieurs dispositifs de la pluralité de dispositifs (10) de l'installation de mélange d'asphalte.

11. Installation de mélange d'asphalte selon l'une quelconque des revendications 3 à 10, dans laquelle le troisième ensemble d'actions comprend l'initiation automatique, par l'unité de commande (40), d'actions en fin de cycle et/ou d'étapes de traitement actif pour réduire les émissions.

12. Installation de mélange d'asphalte selon l'une quelconque des revendications 4 à 11, dans laquelle le troisième ensemble d'actions ou le quatrième ensemble d'actions comprend l'arrêt de toute alimentation et de tout dosage d'asphalte récupéré à l'installation de mélange d'asphalte et/ou au mélange d'asphalte.

13. Installation de mélange d'asphalte selon l'une quelconque des revendications précédentes, dans laquelle l'unité de commande (40) comprend une mémoire (43) et dans laquelle la mémoire (43) est configurée pour stocker un tableau de correspondance (700), le tableau de correspondance comprenant une matrice d'action.

14. Installation de mélange d'asphalte selon l'une quelconque des revendications précédentes, dans laquelle l'unité de prédiction d'émissions (41) est configurée pour calculer
par un premier procédé de prédiction, une prédiction linéaire basée sur une extrapolation linéaire, de valeurs d'émissions mesurées, notamment de valeurs d'émissions moyennes intermédiaires mesurées de sous-intervalles de l'intervalle cible ; et/ou
par un deuxième procédé de prédiction, une valeur d'émissions moyenne intermédiaire mesurée du dernier sous-intervalle de l'intervalle cible ; et/ou
par un troisième procédé de prédiction, une valeur d'émissions moyenne actuelle mesurée des sous-intervalles précédents de l'intervalle cible.

15. Installation de mélange d'asphalte selon la revendication 14, dans laquelle
l'unité de commande (40) est conçue pour
entrer dans la première étape si le seuil est susceptible d'être dépassé conformément au premier procédé de prédiction ;
entrer dans la deuxième étape si le seuil est susceptible d'être dépassé conformément au deuxième procédé de prédiction et/ou au troisième procédé de prédiction ; et/ou
entrer dans la troisième étape si le seuil est susceptible d'être dépassé conformément au deuxième procédé de prédiction et/ou au troisième procédé de prédiction.

16. Installation de mélange d'asphalte selon la revendication 14 ou la revendication 15, dans laquelle
l'unité de commande (40) est conçue pour désactiver toutes les actions de la procédure d'alerte, notamment les actions de la première, de la deuxième et/ou de la troisième étape, si le seuil est susceptible de passer en dessous du seuil
conformément au premier procédé de prédiction ainsi que conformément au deuxième procédé de prédiction ; ou
conformément au premier procédé de prédiction ainsi que conformément au troisième procédé de prédiction ; ou
conformément au premier procédé de prédiction, au deuxième procédé de prédiction et au troisième procédé de prédiction.

17. Installation de mélange d'asphalte selon l'une quelconque des revendications 2 à 16, dans laquelle
le premier ensemble d'actions est sélectionné dans le groupe constitué par :
la réduction de la vitesse d'alimentation de l'asphalte récupéré et l'augmentation de la vitesse d'alimentation des agrégats vierges ;
la vérification des réglages de brûleur des brûleurs de l'installation de mélange d'asphalte ;
la réduction de la température du matériau, notamment la température de matériau de sortie, de l'asphalte récupéré à chaud ;
la réduction de la température de matériau d'un mélange d'asphalte dans un mélangeur de l'installation ; et
la réduction de la teneur en asphalte récupéré dans le matériau de mélange d'asphalte.

18. Installation de mélange d'asphalte selon l'une quelconque des revendications 2 à 17, dans laquelle
le deuxième ensemble d'actions est sélectionné dans le groupe constitué par :
le blocage d'une augmentation de charges de brûleur des brûleurs de l'installation de mélange d'asphalte, notamment d'un brûleur d'un tambour d'agrégats vierges et/ou d'un brûleur d'un tambour d'asphalte récupéré ;
la réduction de la température de matériau de l'asphalte récupéré à chaud à une température cible réglable ;
la régulation des charges de brûleur en fonction d'une température de matériau cible réglable de l'asphalte récupéré à chaud, notamment la charge de brûleur d'un brûleur d'un tambour d'agrégats vierges et/ou la charge de brûleur d'un brûleur d'un tambour d'asphalte récupéré ;
la réduction de la vitesse d'alimentation d'asphalte récupéré par un pourcentage prédéfini ; et
la réduction du débit de dosage d'asphalte récupéré à froid et/ou à chaud par un pourcentage prédéfini.

19. Installation de mélange d'asphalte selon l'une quelconque des revendications précédentes,
dans laquelle l'unité de prédiction d'émissions (41) est conçue pour calculer régulièrement en parallèle une ou plusieurs prédictions de valeurs d'émissions moyennes pour un premier intervalle de temps cible et une ou plusieurs prédictions de valeurs d'émissions moyennes pour un second intervalle de temps cible, le second intervalle de temps cible étant plus long que le premier intervalle de temps cible.

20. Installation de mélange d'asphalte selon la revendication 19, dans laquelle le premier intervalle de temps cible est un intervalle de temps de 30 minutes et le second intervalle de temps cible est un intervalle de temps de 1 jour calendaire.

21. Procédé de fonctionnement d'une installation de mélange d'asphalte, l'installation de mélange d'asphalte comprenant une pluralité de dispositifs (10), une unité de mesure d'émissions (20), une pluralité de capteurs de procédé (11) et une unité de commande (40) comprenant une unité de prédiction d'émissions (41), le procédé comprenant
la mesure, par l'unité de mesure d'émissions (20), des émissions actuelles de l'installation de mélange ;
la fourniture, par l'unité de mesure d'émission (20), de valeurs d'émissions actuelles à l'unité de commande ;
la détection, par les capteurs de procédé (11), des paramètres de procédé des dispositifs (10) de l'installation de mélange d'asphalte ;
la réception, par l'unité de commande (40) des valeurs d'émissions actuelles provenant de l'unité de mesure d'émissions (20) ;
la réception, par l'unité de commande (40), des paramètres de procédé provenant de la pluralité de capteurs de procédé (11) ;
le calcul, par l'unité de prédiction d'émissions (41), d'une prédiction de valeurs d'émissions moyennes d'une ou plusieurs substances cibles pendant un intervalle de temps cible prédéfini ; et
l'exécution, par l'unité de commande (40), d'une procédure d'alerte si un seuil prédéfini des valeurs d'émissions moyennes pour l'intervalle cible prédéfini est susceptible d'être dépassé conformément à la prédiction de l'unité de prédiction d'émissions (41).

22. Produit-programme informatique ayant des instructions de programme exécutables par une unité de commande (40) d'une installation de mélange d'asphalte, l'unité de commande (40) comprenant une unité de prédiction d'émissions (41), l'installation de mélange d'asphalte comprenant une pluralité de dispositifs (10), une unité de mesure d'émissions (20) conçue pour mesurer les émissions actuelles de l'installation de mélange d'asphalte et une pluralité de capteurs de procédé (11), dans lequel les instructions de programme, lorsqu'elles sont exécutées par l'unité de commande (40), amènent l'unité de commande à exécuter un procédé comprenant
la réception, par l'unité de commande (40) des valeurs d'émissions actuelles provenant de l'unité de mesure d'émissions (20) ;
la réception, par l'unité de commande (40), des paramètres de procédé provenant de la pluralité des capteurs de procédé (11) ;
le calcul, par l'unité de prédiction d'émissions (41), d'une prédiction de valeurs d'émissions moyennes d'une ou plusieurs substances cibles pendant un intervalle de temps cible prédéfini ; et
l'exécution, par l'unité de commande (40), d'une procédure d'alerte si un seuil prédéfini des valeurs d'émissions moyennes pour l'intervalle cible prédéfini est susceptible d'être dépassé conformément à la prédiction de l'unité de prédiction d'émissions (41).
